# NEW EUROPEAN PATENT SPECIFICATION

(11) **EP 0 558 675 B2**
(45) Date of publication and mention of the opposition decision: **06.03.2002**
(45) Mention of the grant of the patent: 11.01.1995
(21) Application number: 92902508.8
(22) Date of filing: 14.11.1991
(51) Int. Cl.: C04B 35/66, C04B 35/04, C04B 35/06

(54) **HEAT ACTIVATED REPAIR AGENT**
IN DER HITZE ZU AKTIVIERENDE AUSBESSERUNGSMASSE
COMPOSE S'ACTIVANT A CHAUD SERVANT D'AGENT DE REPARATION

(30) Priority: 22.11.1990 JP 32018290
(43) Date of publication of application: 08.09.1993
(73) Proprietor: MINTEQ INTERNATIONAL INC., New York, New York 10174-1901 (US)
(72) Inventor: ISHIKAWA, Kentaro, Okazaki, Aichi (JP); OHASHI, Tsugiya, Nukata, Aichi (JP); ASAKA, Eiji, Toyohashi, Aichi (JP)
(74) Representative: Bawden, Peter Charles
(86) International application number: US9108305
(87) International publication number: WO9209542

(56) References cited:
- EP-A- 0 037 165
- EP-A- 0 042 897
- GB-A- 258 320
- US-A- 2 499 729
- World Patents Index, Week 8022, Derwent Publications Ltd., London, GB; AN 80-38980C and JP-A-55 051 763

## Description

### Background of the Invention

The present invention relates to a thermally activated dry refractory composition used for high temperature installation and repair of the interior refractory lining of furnaces such a steel conversion furnaces, and other high-temperature vessels, and to a method for application of the composition, particularly for the repair of worn or damaged areas of a refractory lining.

Refractory aggregate that has a high content of MgO or MgO equivalents, such as magnesia, dolomite and olivine, has conventionally been used as a refractory material for high temperature installation and repair of the refractory lining of steel conversion furnaces and the like. These refractory compositions are also required to have high strength. Mixtures containing both dolomite aggregate and magnesia aggregate have recently come into general use because of their greater strength. These refractory compositions generally also contain various other components which act as binders and flowability promoting agents. Pitch, tar, thermosetting resins, thermoplastic resins, polyhydric alcohols and free liquid water have frequently been added, in the past, for such purposes.

Refractory compostions for the installation or repair of refractory surfaces in furnaces and other high-temperature vessels are generally applied in either one of two ways. The first method is generally referred to as a "wet" method wherein the refractory composition is applied in the form of an aqueous slurry of the composition, utilizing gunning or spraying techniques. The second general method for application utilizes a non-aqueous mixture of the essential refractory composition and a non-aqueous, usually organic solvent or carrier material, such a pitch, tar, thermosetting resins, thermoplastic resins, and polyhydric alcohols.

Heretofore, however, there has not been a refractory composition capable of application in a dry state, that is, a composition not requiring additional solvents, slurrying agents, or flowability promoting agents in addition to the essential dry refractory components themselves in order to cause the composition to flow.

Document EP-A-0 037 165 disclosing a dry gunning composition suggests to include up to 10% pitch and 0,5-5% aluminium sulphate (a hydrated material) in the composition; this amount, however of the hydrated material, with respect to the amount of bound water contained therein, is considered as insufficient to thermally activate and make the composition self-flowable in the furnace.

Therefore, one object of the present invention is a refractory composition which is capable of being applied in a truly "dry" condition, and which has the property of self-flowability at the time of application in order to eliminate the requirement for the addition of a solvent, slurrying agent, or flowability promoting agent in order to cause the refractory composition to flow.

United States Patent 2 499 729 discloses a refracting repair composition containing a comminuted dry refracting aggregate and sodium silicate nonahydrate.

A disadvantage of refractory compositions which are applied in a "wet" state, as an aqueous slurry of the refractory composition, is the extensive amount of time required in order to cause evaporation of the water and drying and setting of the refractory composition after it has been applied. Another object of the present invention is a refractory composition which does not require excessive amounts of time to dry and set when applied.

Refractory compositions which includes various types of organic solvents, carriers, and flowability-promoting agents pose an environmental concern caused by evaporation of the organic material after the refractory composition is applied and is heated to cause it to set.

Refractory compositions presently in use for such high temperature applications, nevertheless, still have a number of disadvantages.

Those containing pitch and tar a binders and flowability promoting agents may potentially cause environmental problems and adversely affect the properties of the refractory material itself due to fuming resulting from the partial combustion or thermal decomposition of the added pitch or tar during high temperature application. Moreover, the use of those refractory compositions which require the addition of large amounts of water or non-aqueous liquid to cause flowability results in increased furnace down time because of the long baking time required for those materials to dry and set. The non-aqueous liquids contain substantial amounts oil. Polyhydric alcohol can also be used as the non-aqueous liquid.

Although refractory compositions containing thermosetting resins and thermoplastic resins emit less smoke during hot application than is emitted by the pitch and tar containing agents, refractory compositions containing thermosetting resins and thermoplastic resins, however, have a relatively short storage life, which makes it difficult to maintain large quantities of the material on hand. If the storage temperature of those materials is allowed to rise much above 15-20°C, there is a tendency for phenolic bonds in the resins to cross-link, which greatly reduces the workability of the compositions Resin-containing compositions, therefore, must be stored at a low temperature, preferably below about 15°C (^{~}60°F).

Refractory compositions containing polyhydric alcohols fume during high temperature application. Compositions containing high volatility binders and flowability agents, such a alcohols, also have the disadvantage that when they are applied, they tend to deform and demonstrate poor adherence properties. Those refractory compositions which require kneading, after the addition of water of mixing, have the disadvantage of the extra, time-consuming kneading step which reduces the productivity that can be achieved when using such compositions.

The present invention overcomes all of the above problems and limitations by providing a refractory composition for high temperature application which offers the advantages of simplicity of use and application, which improves productivity, and of being environmentally safe, by not causing fuming or other deleterious environmental effects.

Moreover, heretofore, refractory compositions for the application of a new refractory lining and for the repair of an existing refractory lining on the inner surface of a furnace and the like have been applied to the surface to be coated, either by gunning, spraying or trowelling of an aqueous slurry or pate of the refractory composition, which necessitates pre-mixing of the refractory material with substantial amounts of water prior to application, or by spraying as a non-aqueous slurry. This requirement has a number of disadvantages, including the inability to maintain pre-mixed quantities of the material in condition for application due to drying and setting of the material before use; the requirement, in gunning and spraying modes of application, for relatively sophisticated and sensitive equipment, which may very easily become clogged, for mixing and applying the slurried refractory composition; and the need for a source of water with which the refractory composition can be mixed.

It has now been discovered that a dry refractory composition can be made self-flowable at high temperature by incorporating therein a sufficient amount of a component containing a sufficient amount of chemically bound crystalline water which is releaseable at high temperature and which does not require the addition of further liquid water from other sources.

The use of hydrated materials in refractory compositions as a binder to provide at least part, if not all, of the water required to cause binding of the dry components was heretofore known in the art, however, those compositions utilizing hydrated materials as binders suffer from a disadvantage of having shelf life stability problems. It was, however, heretofore unknown that a hydrated material containing a sufficient amount of releasible water of hydration was utilizable a the sole self-flowability agent in the composition.

The refractory arts have heretofore lacked a dry, thermally activated, self-flowing refractory composition capable of being installed in a dry state in a high-temperature environment to thereby become thermally activated, releaing crystalline water of hydration from the hydrated component to provide moisture, and causing self-flowability of the overall refractory composition. The composition of the present invention successfully overcomes all of the limitations of compositions previously known in the art in this regard.

The thermally activated, dry refractory composition and method for its application of the present invention overcomes all of the disadvantages of conventional materials and methods of application. The present invention enables the application of the refractory composition to a surface to be coated in a "dry" state, which does not require a separate source of water or other non-aqueous liquid for mixing, and without the need for complicated equipment.

The refractory composition of the present invention offers the further advantage that its method of use and application is very simple, easy and inexpensive. Because the composition is applied in a dry state, a separate source of water for mixing with the composition to form a slurry is not required. Moreover, because the composition is applied in a dry state, it is not necessary to use any complex, expensive machinery or tools, such as sprayers or guns, as are required to apply sprayable and gunnable aqueous slurry compositions, respectively. Because such devices are subject to clogging and breakage and must be serviced regularly, there is an added disadvantage of frequent down-time and loss of productivity associated with the application of compositions in the form of aqueous slurries. Moreover, the application of aqueous slurry compositions using gunning, spraying and trowelling techniques, requires that the furnace, in which the refractory composition is being applied, be cooled down to a temperature that will allow workers access to the surface to be coated for a sufficient time to perform the coating job. Alternatively, the work may be performed at elevated temperature, however, the use of complex, expensive, automated remote control gunning and spraying equipment, which is hard to manipulate, not always thorough, and is subject to failure, is required.

### Summary of the Invention

The thermally activated, dry refractory composition for high temperature application of the present invention is comprised of a MgO or MgO equivalent-containing refractory aggregate, such as magnesia, dolomite, olivine, calcium carbonate coated dolomite, and mixtures thereof, in an amount of from about 35 to about 85 percent by weight of the total composition with from about 15 to about 50 percent by weight of the total composition of a hydrated material containing chemically bound water in crystalline form, such as an alkali metal metasilicate or sulfate hydrate, or an alkaline earth metal metasilicate or sulfate hydrate, with the crystalline water associated with the hydrated material being present in an amount of at least 20 percent by weight of the hydrated material. Preferably, there are from about 5 to about 9 moles of crystalline water per mole of hydrated material. The crystalline water constitutes from about 7 to about 35 weight percent of the total refractory composition. The composition may further optionally contain from about 0.1 to about 10 wt% of free calcium carbonate and from about 0.1 to about 5 wt% of phosphate glass.

### Detailed Description of the Invention

The thermally activated, dry refractory composition for high temperature application of the present invention is described in detail in the following.

The refractory composition contains an MgO or MgO equivalent-containing aggregate, such as magnesia, olivine, calcium carbonate coated dolomite, and mixtures thereof, in a total amount of from about 35 to about 85 wt%. Basic, MgO-containing refractory aggregates are utilized in situations where the material with which the refractory composition comes in contact, such as molten steel, provides a slag having basic chemical properties. Generally, although conventionally used MgO aggregate can be used and its particle size is not specially restricted, MgO aggregate having a particle size of from about 0.1 to about 7.0 mm is preferred in terms of the strength, self-flowability and filling property of the resulting refractory composition. Special dolomite aggregate obtained by performing a surface treatment using carbonic acid gas on natural dolomite aggregate or synthetic dolomite aggregate in order to increase its slaking resistance is preferably used in the refractory composition of the present invention.

The thickness of the CaCO₃ coating layer formed is preferably from about 0.4 to about 1.0 µ m because sufficient improvement of slaking resistance due to the formation of a CaCO₃ coating layer is not achieved if the thickness is less than 0.4 µ m and further improvement of slaking resistance is not achieved even if the thickness exceeds 1.0 µ m. Although the particle size of the coated dolomite aggregate is not restricted, it preferably has a particle size of about 7 mm or less, for the same reasons as those mentioned for MgO aggregate.

A process for the preparation of a calcium carbonate-coated dolomite refractory aggregate, such as is preferably utilized as a refractory aggregate according to the present invention, is fully disclosed in the specification of a co-pending U.S. Patent Application Serial No. 745,574, filed August 15, 1991, claiming priority from Japanese Patent Application No. 216,179/90, filed August 16, 1990, and commonly assigned to the assignee of the instant application, which is fully incorporated herein by reference.

To these aggregates, from 15 to 50 wt% of a hydrated material and, optionally, from 0.1 to 10 wt% of a homogenizer and from 0.1 to 5 wt% of a binder are added. The hydrated material is selected from the group consisting of alkali metal metasilicates and sulfates, and alkaline earth metal metasilicates and sulfates.

The choice of hydrated material depends in part on the acidic or basic nature of the overall chemical environment.

Although the pentahydrate and nonahydrate of sodium metasilicate are preferably used as a metasilicate hydrate, the present invention is not restricted to these hydrates and the heptahydrate of magnesium sulfate can be used in combination with the above hydrates.

A metasilicate hydrate is added to the aggregates in manufacturing a refractory composition in order to make the dry refractory composition a self-flowable, liquid water-containing slurry at high temperature. During addition of the refractory composition to a hot furnace, self-flowability of the refractory composition occurs because the hydrate dehydrates releasing the previously crystallized, chemically bound water of hydration and the "dry" refractory composition is thereby moistened, enabling it to flow as a slurry. The amount of metasilicate hydrate added should be from about 15 to about 50 wt% because an amount less than 15 wt% cannot ensure sufficient fluidity of the composition and an amount exceeding 50 wt% results in significant separation of coarse particles from minute particles in the composition, thereby resulting in possible loss of sufficient strength in the refractory linings formed or repaired using the composition.

Calcium carbonate can be used in order to improve the filling property and homogeneity of the resulting refractory composition. Although the self-flowability of the resulting composition can be ensured at high temperatures by adding a metasilicate hydrate to the aggregates as mentioned above, the addition of a metasilicate hydrate is not sufficient for inhibiting the separation of coarse particles from fine particles in the composition. Consequently, the refractory composition still only ha inferior filling properties, and blistering can occur in the upper part of a repaired surface. The separation of coarse particles from fine particles is inhibited in the composition and its filling property is improved without reducing the effect produced by the addition of a metasilicate by the addition of calcium carbonate to the composition. The amount of calcium carbonate added is from about 0.1 to about 10 wt% because an amount less than about 0.1 wt% cannot sufficiently improve the filling property of the resulting composition and an amount exceeding 10 wt% causes a decrease in the self-flowability of the composition.

Although there is no restriction in the particle size of calcium carbonate utilized, it is preferably about 10 µ m or less in order to increase the filling property of the resulting refractory composition.

Although phosphate glass which contains phosphoric acid as one of the main ingredients can also be used in place of plain phosphate glass, in the present invention it is preferred to use refractory phosphate glass which has received a special treatment for making it resistant to water, such as by treatment with L-2 or L-5 (commercial name), a hydrophobic material, produced by Taihei Chemical Co., Ltd. Phosphate glass is used in a refractory composition for hot application according to the present invention because, although adding phosphoric acid to a refractory composition generally improves its strength, it causes deterioration of its fluidity. Adding phosphate glass, especially refractory phosphate glass, not only eliminates the above disadvantages, but also inhibits the separation of coarse particles from fine particles. The amount of phosphate glass added is from about 0.1 to about 5 wt% because, as with calcium carbonate mentioned above, an amount less than about 0.1 wt% does not fully exhibit the effect of inhibiting the separation of coarse particles from fine particles and an amount exceeding 5 wt% causes a decrease in the self-flowability of the composition.

A thermally activated, dry refractory composition according to the present invention is obtained by homogeneously blending the above proportions of aggregates and additives using a mixer or a similar device.

Additives other than the above ones may be added to a refractory composition for hot application according to the present invention depending on its use. Proportions of additives regarded a within the range of the present invention are a set forth in the claims hereinbelow. The total weight percent amount of aggregates present in the composition is calculated based on the ranges of proportions of the other additives as the balance of the overall composition to give 100 percent. The actual amount of aggregate present in the composition is not critical as long as the amounts of self-flowability agent, binder and homogenizing agents are within the specified ranges and are effective for the amount of aggregate actually present.

The thermally activated, dry refractory composition thus manufactured greatly reduces the time required for baking the applied material during repair to cause it to set, as compared to a conventional repair agent. Use of a combination of an MgO or MgO equivalent containing aggregate and a special calcium carbonate coated dolomite aggregate contributes high strength to the composition. The use of a calcium carbonate surface treatment on the dolomite gives the material improved slaking resistance. Addition of a metasilicate hydrate enables application of the refractory composition in a "dry" state. Because the water of hydration is chemically bound, the material itself has a dry feel to the touch. It is not necessary to form a wet mixture by physically adding water to the composition for application. Release of the water of hydration in the metasilicate at elevated temperature gives the composition self-flowability when it is applied to a surface. Addition of calcium carbonate and phosphate glass improves the filling property of the composition and inhibits the separation of coarse and fine particles. Refractory surfaces applied or repaired with the composition of the present invention are free from blistering and are entirely homogenous due in large part to the absence of separation of coarse particles from fine particles. The refractory surfaces coated with the composition of the present invention therefore are highly durable and can withstand long-term use. Furthermore, because the refractory composition of the present invention incorporates no pitch, tar, thermosetting resins or thermoplastic resins, it does not fume during its use and therefore does not cause any environmental pollution problems.

The thermally activated, dry refractory composition for hot application of the present invention greatly shortens the time of baking after application, a compared to the baking time required for conventional refractory compositions to set, and therefore the composition of the present invention achieves improved productivity through faster furnace turn around time for refractory lining installation and repair. Sufficiently high strength of the refractory composition is ensured by using MgO aggregate and special calcium carbonate coated dolomite aggregate having improved slaking resistance. The self-flowability of the composition during its use is ensured by adding a metasilicate hydrate; the filling property of the composition is improved and the separation of coarse particles from fine particles is inhibited by the addition of calcium carbonate and phosphate glass. In addition, since refractory parts and surfaces formed using the composition and according to the method of the present invention are free from blistering and entirely homogeneous due in part to the absence of the separation of coarse particles from fine particles, the refractory parts and surfaces have a high endurance and successfully endure long-term use, therefore enabling the achievement of reduced production cost and improved productivity. Furthermore, because the refractory composition according to the present invention do not contain any pitch, tar, thermosetting resins or thermoplastic resins, they do not fume during use and therefore are environmentally safe.

The method whereby a new refractory lining is installed or an existing one is repaired on the interior surfaces of a furnace, in a hot, dry application, involves the steps of placing into said furnace in proximity with the interior surface to be coated or repaired a sufficient amount for coating or repair, of the thermally activated, dry refractory composition of the present invention containing at least one refractory aggregate and at least one hydrated material containing chemically bound water of hydration; maintaining a hot furnace at a sufficient temperature or raising the temperature in the furnace to a sufficient temperature to cause release of the chemically bound water of hydration from the hydrate compound, such that the released water first mixes with the refractory aggregate and all other components of the dry refractory composition to form a flowable slurry which flows over and completely coats the furnace interior surface on which the refractory lining is being coated or repaired; and maintaining a sufficiently elevated temperature in the furnace to vaporize the water of hydration from the slurry, thereby causing the refractory composition to dry and set in place leaving the newly applied or repaired refractory lining. Where the furnace size permits practicability, the furnace may be tilted to direct the flow of the refractory composition to the particular location on the surface to be coated or repaired.

In practicing the method of applying the refractory under hot, dry conditions, the at least one refractory aggregate of the refractory composition is from about 35 to about 85 weight percent of the total refractory material and is selected from the group consisting of magnesium oxide or magnesium oxide equivalent aggregate, a calcium carbonate coated dolomite aggregate having a calcium carbonate coating of from about 0.4 to about 1.0 µ m on the dolomite, and mixtures thereof; and the at least one hydrate compound of the refractory composition is from about 15 to about 50 weight percent of the total refractory composition and contains from about 1 to about 9 moles, and preferably from about 5 to about 9 moles, of chemically bound water of hydration per mole of hydrate, such that when the water of hydration is liberated at elevated temperature a sufficient total amount of water is made available to cause the formation of a flowable aqueous slurry of the refractory composition. The hydrate compound is selected from the group consisting of sodium metasilicate pentahydrate, sodium metasilicate nonahydrate, magnesium sulfate heptahydrate, and mixtures thereof. The preferred hydrated materials are sodium metasilicate pentahydrate and sodium metasilicate nonahydrate.

The thermally activated, dry refractory composition utilized in such an application may further contain from about 0.1 to about 10 weight percent of a calcium carbonate-containing binding agent, and from about 0.1 to about 5 weight percent of a flowability enhancing agent selected from the group consisting of phosphate glass, both untreated and treated with phosphoric acid or a hydrophobic agent.

When applying the refractory composition of the present invention according to the above described method, the temperature to which the temperature in the furnace is raised to cause release of the water of hydration from the hydrate compound is at least about 500°C, and preferably is from about 1000°C to about 1400°C.

The nature of the present invention may be more fully understood from the following examples which are not intended to be limiting in any way. The scope of the refractory composition for hot application and method of making it is established by the claims which follow herein below.

### EXAMPLE 1

Four types of refractory composition for hot application according to the present invention were produced and utilized in a laboratory-scale furnace according to the proportions shown in Table 1.

**Table 1**

| **Component (wt%)/Sample #** | **1** | **2** | **3** | **4** |
|---|---|---|---|---|
| MgO | 40 | 30 | 30 | 20 |
| CaCO₃ coated dolomite | 20 | 30 | 20 | 30 |
| Na metasilicate (nonahydrate) | 30 | 30 | - | - |
| Na metasilicate (pentahydrate) | - | - | 40 | 40 |
| Calcium carbonate | 7 | 7 | 7 | 7 |
| Refractory phosphate glass | 3 | 3 | 3 | 3 |

When the resulting refractory compositions were used for repair of steel conversion furnaces, none of the compositions exhibited fuming at furnace temperatures as high as from 1,000 ° C and they required only a relatively short baking time of 10 minutes.

When conventional refractory compositions containing pitch and tar as binders were used for furnace repair in the same way, in comparison, they emitted large amounts of smoke and required at least 40 minutes for baking. When conventional refractory compositions containing thermosetting resins and thermoplastic resins as binders were used for repair in the same way, they emitted moderate amounts of smoke and still required 15 minutes for baking.

When the endurance of refractory surfaces repaired using the above mentioned conventional compositions was examined, conventional compositions containing pitch or the like as a binder and those containing resins a binders had similar degrees of endurance, whereas all surfaces repaired using the refractory compositions of the present invention demonstrated an endurance at least twice that of the surfaces coated with the conventional compositions.

### EXAMPLE 2

### Dry, Thermally Activated, Self-Flowable Refractory Composition Formulation

A dry, thermally activated, self-flowable refractory composition according to the present invention was prepared having the following composition:

| **Component** | | | **Wt.%** |
|---|---|---|---|
| Natural MgO | -5 Mesh | | 17.0 |
| | Pulverized | | 20.5 |
| Calcium Carbonate-Coated Dolomite (-3mm) | | | 33.0 |
| Sodium Metasilicate | | Nonahydrate | 16.0 |
| | | Pentahydrate | 10.0 |
| Magnesium Sulfate Heptahydrate | | | 1.0 |
| Calcium Carbonate | | | 1.5 |
| Phosphate Glass | | | 1.0 |

### Installation for Furnace Repair

The composition was field installed and evaluated in the repair of the refractory lining of a BOF (Basic Oxygen Furnace) steelmaking furnace have a capacity of 275 MT steel volume for producing various types and grades of steel, from plain steel to high alloy steel, and from low to high carbon content in steel grade.

The amount of a refractory composition utilized to effect repair of the lining of a particular furnace is proportional to the overall capacity of the furnace (furnace surface area), the extent of wear or damage to the refractory surface, which is proportional to the operating cycle length, i.e., the number of heats of molten material that the lining has been exposed to since its first installation, in the case of new linings, or last repair, in the case of previously repaired linings, and the thickness of the refractory coating, which generally ranges from about 1.5 to about 4 inches, depending on the number of heats desired to be handled in an operating cycle, and depending on the nature of the material handled and the operating temperature.

The refractory composition of the present invention was installed by depositing into the furnace 1 MT of the dry material, which was the amount calculated to coat and fill-in the damaged surface area and provide a coating of a thickness of from 1.5 to 2 inches over the various surface area in the furnace, after an operating cycle of 16 heats. The material was deposited by crane. Alternatively, a scrap-shooter, or where the furnace is sufficiently large, a fork-lift can be utilized to deposit the mass of dry refractory composition in the furnace.

The furnace was maintained at a temperature in excess of 800°C to thermally activate the refractory composition upon deposit.

The refractory composition became self-flowable after several minutes as crystalline water was released from the hydrated material and began to mix with the dry components of the composition.

Once the composition had become homogeneous and self-flowable, distribution of the material to specific sites within the furnace, where the refractory material was to repair worn or damaged areas, was directed by tilting the furnace so that the refractory material flowed to fill-in the eroded and damaged areas.

The material cured in about 7 minutes. After the composition had set, the furnace was retilted to operating position. The repaired furnace was then ready to receive the next heat of molten metal.

Similar results are obtained in other types of furnaces and vessels, wherein the amount of refractory composition required for repair after a cycle of heats, has been observed to be as is shown in Table 2, below:

**Table 2**

| **Type of Furnace or Vessel** | **Amount of Refractory Composition Typically Required for Repair After Normal Cycle of Heats** |
|---|---|
| Basic Oxygen Furnace (BOF) | 1-3 MT |
| Electric Furnace | 50 kg - 1 MT |
| Argon/Oxygen Decarbonization (AOD) Furnace | 50 kg - 1 MT |
| Steel Ladle or Tundish | 5 kg - 200 kg |

### EXAMPLE 3

### Comparative Performance of Refractory Composition of the Present Invention and Tar, Pitch, Thermosetting Resin and Thermoplastic Resin-containing Compositions of the Prior Act

Table 3 is a comparison of in-service characteristics of the refractory composition of the present invention and the most frequently used compositions previously known and used in the art.

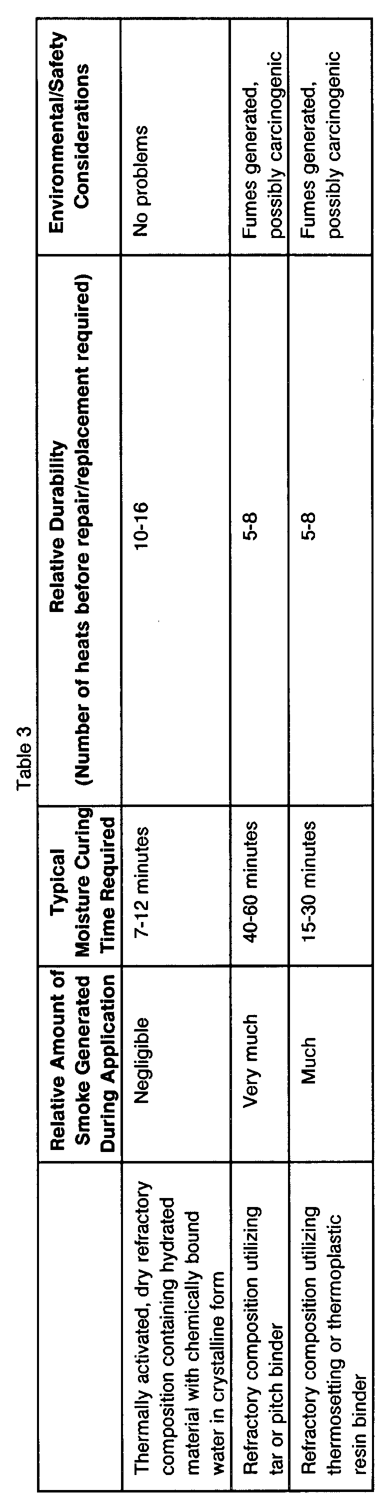

## Claims

1. A dry refractory composition for the coating and repair of an interior refractory lining of a furnace and the like, comprising a MgO or MgO equivalent containing refractory aggregate and 15-50 wt% of the total composition of a hydrated material containing chemically bound water in crystalline form, said hydrated material being present in a sufficient amount, with respect to the amount of bound water contained therein, to provide moisture to said composition to cause self-flowability thereof when said composition is applied to a surface in a furnace and the like, upon which a new refractory lining is to be coated or an existing damaged refractory lining is to be repaired, with said furnace being maintained at an elevated temperature sufficient to cause thermal activation of said refractory composition, whereby release and liquefaction of said chemically bound water from said hydrated material occurs such that said composition becomes self-flowable and is capable of flowing from a place on said surface to which it was initially applied to another proximal place on said surface where it completely coats said surface with a new refractory lining, or fills-in defects and effects the repair of an existing refractory lining, said composition containing from 0.1 to 10 wt % of the composite of calcium carbonate and from 0.1 to 5 wt % of the composition of a compound selected from the group consisting of phosphate glass both untreated and treated with a compound selected from the group consisting of phosphoric acid and a hydrophobic agent.

2. The composition according to Claim 1 wherein the refractory aggregate is selected from the group consisting of magnesia, dolomite, olivine, calcium carbonate coated dolomite and mixtures thereof.

3. The composition according to Claim 1 or Claim2 wherein the refractory aggregate is the balance of the overall composition to give 100 per cent.

4. The composition according to any of the preceding claims wherein the hydrated material is selected from the group consisting of alkali metal metasilicate and sulphate hydrates and alkaline earth metal metasilicate and sulphate hydrates.

5. The composition according to Claim 4, wherein the hydrated material is selected from the group consisting of sodium metasilicate pentahydrate, sodium metasilicate nonahydrate, magnesium sulphate heptahydrate and mixtures thereof.

6. The composition according to any of the preceding claims wherein the crystalline water associated with the hydrated material is from 7 to 35 wt % of the total composition.

7. The composition according to any of the preceding claims wherein each mole of hydrated material contains at least 20% by weight crystalline water.

8. The composition according to Claim 2 wherein the calcium carbonate coated dolomite has a coating of from 0.4 to 1.0µm in thickness of calcium carbonate on the dolomite.

9. The composition according to Claim 4 wherein the alkali metal is sodium and the alkaline earth metal is magnesium.

10. The composition according to Claim 4 wherein the hydrated material is a sodium metasilicate hydrate.

11. The composition according to Claim 7, wherein each mole of hydrated material has from 5 to 9 moles of crystalline water associated therewith.

12. A method for enabling the dry application of a new coating of a refractory lining or the repair of an existing refractory lining on the interior surfaces of a furnace and the like, at high temperature, comprising:
placing into said furnace in proximity with the interior surface to be coated or repaired, a sufficient amount to effect said coating or repair, of a dry, thermally activated refractory composition according to any of Claims 1 to 11;
with the temperature in the furnace being maintained at or raised to a level sufficient to cause thermal activation of said refractory composition, whereby release and liquefaction of said chemically bound water from said hydrated material occurs, such that said composition becomes self-flowable and flows from a place on said surface to which it was initially applied, to completely coat said surface with a new refractory lining, or fill-in defects and effect the repair of an existing refractory lining; and
maintaining a sufficiently elevated temperature in said furnace to vaporize the liquid water in said composition, thereby causing said refractory composition to dry and set in place leaving a newly applied or repaired refractory lining.

13. The method according to Claim 12 wherein the temperature in the furnace is at least 500°C.

14. A method for the installation and repair of the refractory lining of a furnace and the like comprising:
depositing into said furnace proximal to the surface to be coated or repaired an amount of a dry thermally activated refractory composition composed of a MgO or MgO equivalent containing refractory aggregate and a hydrated material containing chemically bound water in crystalline form, said hydrated material being present in a sufficient amount, with respect to the amount of bound water contained therein to provide moisture to said composition, such that at an elevated temperature sufficient to cause release and liquefaction of said bound water, at which temperature in said furnace is raised to or maintained at, the water mixes with the composition to render it self-flowable;
tilting said furnace to direct the flow of the refractory composition to the place on the surface to be coated or repaired; and
allowing the refractory composition to dry and set.

15. The method according to Claim 14 wherein the dry, thermally activated refractory composition is deposited into the furnace by one of the methods selected from the group consisting of shovelling into place, lowering into place by crane, setting in place with a forklift, and shooting into place with a scrap-shooter.

16. The method according to Claim 14 or Claim 15 wherein the furnace is maintained at a temperature of at least 500°C.

## Patentansprüche

1. Trockene Feuerfestzusammensetzung zum Beschichten und Reparieren einer feuerfesten Innenauskleidung eines Ofens und dergleichen, umfassend einen MgO oder ein MgO-Äquivalent enthaltenden Feuerfestzuschlag und 15 - 50 Gewichtsprozent der gesamten Zusammensetzung eines hydratisierten Materials, das in kristalliner Form chemisch gebundenes Wasser enthält, welches hydratisierte Material in bezug auf die Menge des darin gebundenen Wassers in einer ausreichenden Menge vorliegt, um der Zusammensetzung Feuchtigkeit zu gewähren, um darauf Selbstfließfähigkeit zu bewirken, wenn die Zusammensetzung auf eine Oberfläche in einem Ofen und dergleichen aufgebracht wurde, auf die eine neue feuerfeste Auskleidung aufgetragen oder eine bestehende beschädigte, feuerfeste Auskleidung repariert werden soll, wobei der Ofen bei einer erhöhten Temperatur gehalten wird, die ausreicht, um thermische Aktivierung der Feuerfestzusammensetzung zu bewirken, wodurch ein Freisetzen und Flüssigwerden des chemisch gebundenen Wassers von dem hydratisierten Material derart erfolgt, daß die Zusammensetzung selbstfließfähig wird und in der Lage ist, von einer Stelle auf der Oberfläche, auf die sie anfangs aufgetragen wurde, zu einer anderen proximalen Stelle auf der Oberfläche zu fließen, wo sie die Oberfläche mit einer neuen feuerfesten Auskleidung vollständig beschichtet oder Defekte ausfüllt und die Reparatur einer bestehenden feuerfesten Auskleidung bewirkt, wobei die Zusammensetzung von 0,1 bis 10 Gewichtsprozent der Zusammensetzung Calciumcarbonat und von 0,1 bis 5 Gewichtsprozent der Zusammensetzung eine Verbindung ausgewählt aus der Gruppe, bestehend aus Phosphatgas, sowohl unbehandelt als auch behandelt mit einer Verbindung, ausgewählt aus der Gruppe, bestehend aus Phosphorsäure und einem Hydrophobierungsmittel enthält.

2. Zusammensetzung nach Anspruch 1, bei welcher der Feuerfestzuschlag ausgewählt wird aus der Gruppe, bestehend aus Magnesia, Dolomit, Olivin, mit Calciumcarbonat beschichtetem Dolomit sowie Mischungen davon.

3. Zusammensetzung nach Anspruch 1 oder 2, bei welcher der Feuerfestzuschlag der Ausgleich der Gesamtzusammensetzung ist, um 100 % zu erhalten.

4. Zusammensetzung nach einem der vorstehenden Ansprüche, bei welcher das hydratisierte Material ausgewählt wird aus der Gruppe, bestehend aus Alkalimetallmetasilicat- und -sulfat-Hydraten sowie Erdalkalimetallmetasilicat- und -sulfat-Hydraten.

5. Zusammensetzung nach Anspruch 4, bei welcher das hydratisierte Material ausgewählt wird aus der Gruppe, bestehend aus Natriummetasilicat-Pentahydrat, Natriummetasilicat-Nonahydrat, Magnesiumsulfat-Heptahydrat sowie Mischungen davon.

6. Zusammensetzung nach einem der vorstehenden Ansprüche, bei welcher das mit dem hydratisierten Material assoziierte Kristallwasser 7 % bis 35 Gewichtsprozent der gesamten Zusammensetzung beträgt.

7. Zusammensetzung nach einem der vorstehenden Ansprüche, bei welcher jedes Mol hydratisiertes Material mindestens 20 Gewichtsprozent kristallines Wasser enthält.

8. Zusammensetzung nach Anspruch 2, bei welcher das mit Calciumcarbonat beschichtete Dolomit eine Beschichtung einer Dicke von 0,4 um Calciumcarbonat auf Dolomit aufweist.

9. Zusammensetzung nach Anspruch 4, bei welcher das Alkalimetall Natrium und das Erdalkalimetall Magnesium ist.

10. Zusammensetzung nach Anspruch 4, bei welcher das hydratisierte Material ein Natriummetasilicat-Hydrat ist.

11. Zusammensetzung nach Anspruch 8, bei welcher jedes Mol hydratisiertes Material von 5 bis 9 Mole damit assoziiertes Kristallwasser aufweist.

12. Verfahren, um die Trockenaufbringung einer neuen Beschichtung einer feuerfesten Auskleidung oder die Reparatur einer bestehenden feuerfesten Auskleidung auf den Innenflächen eines Ofens und dergleichen bei hoher Temperatur zu ermöglichen, umfassend:
Einbringen einer ausreichenden Menge einer trockenen, thermisch aktivierten Zusammensetzung nach einem der Ansprüche 1 bis 11 in den Ofen in die Nähe der inneren Oberfläche, die beschichtet oder repariert werden soll,
wobei die Temperatur in dem Ofen gehalten wird bei oder angehoben wird auf einen Wert, der ausreichend ist, um thermische Aktivierung der Feuerfestzusammensetzung zu bewirken, wodurch ein Freisetzen und Flüssigwerden des chemisch gebundenen Wassers von dem hydratisierten Material derart erfolgt, daß die Zusammensetzung selbstfließfähig wird und von einer Stelle auf der Oberfläche, auf die sie anfangs aufgetragen wurde, zerfließt, um die Oberfläche vollständig mit einer neuen feuerfesten Auskleidung zu beschichten oder Defekte auszufüllen und die Reparatur einer bestehenden feuerfesten Auskleidung zu bewirken; sowie
Halten einer ausreichend hohen Temperatur in dem Ofen, um das flüssige Wasser in der Zusammensetzung zu verdampfen, wodurch bewirkt wird, daß die Feuerfestzusammensetzung am Ort trocknet und abbindet und eine neu aufgetragene oder reparierte feuerfeste Auskleidung hinterlassen wird.

13. Verfahren nach Anspruch 12, bei welchem die Temperatur in dem Ofen mindestens etwa 500 °C beträgt.

14. Verfahren zum Einbau und zur Reparatur der feuerfesten Auskleidung eines Ofens und dergleichen, umfassend:
Einbringen einer Menge einer trockenen, thermisch aktivierten Zusammensetzung in den Ofen proximal zur Oberfläche, die beschichtet oder repariert werden soll, welche trockene, thermisch aktivierte Zusammensetzung zusammengesetzt ist aus einem MgO oder ein MgO-Äquivalent enthaltenden Feuerfestzuschlag und einem chemisch gebundenes Wasser in kristalliner Form enthaltenden hydratisierten Material, welches hydratisierte Material in Bezug auf die Menge des darin enthaltenen gebundenen Wassers in einer ausreichenden Menge vorliegt, um der Zusammensetzung Feuchtigkeit zu verleihen, und zwar bei einer solchen erhöhten Temperatur, daß Freisetzen und Flüssigwerden des gebundenen Wassers bewirkt wird, auf welche erhöhte Temperatur die Temperatur in dem Ofen erhöht oder bei dieser gehalten wird, so daß sich das Wasser mit der Zusammensetzung mischt, um sie selbstfließfähig zu machen;
Kippen des Ofens, um den Fluß der Feuerfestzusammensetzung zu der Stelle auf der Oberfläche zu leiten, die beschichtet oder repariert werden soll; und
Trocknenlassen und Abbindenlassen der Feuerfestzusammensetzung.

15. Verfahren nach Anspruch 14, bei welchem die trockene, thermisch aktivierte Feuerfestzusammensetzung nach einem der Verfahren in den Ofen eingebracht wird, die ausgewählt werden aus der Gruppe, bestehend in ortfest Einschaufeln, ortfest Absenken mit Hilfe eines Kranes, ortfest Einsetzen mit einem Gabelstapler und ortfest Einschütten mit einer Schrottrutsche.

16. Verfahren nach Anspruch 14, bei welchem der Ofen bei einer Temperatur von mindestens 500 °C gehalten wird.

## Revendications

1. Composition réfractaire sèche pour le revêtement et la réparation d'un doublage intérieur réfractaire d'un four ou analogue, qui comprend un agrégat réfractaire contenant MgO ou un équivalent de MgO et 15-50 % en masse de la composition totale d'un matériau hydraté contenant de l'eau chimiquement liée sous forme cristalline, ledit matériau hydraté étant présent en quantité suffisante, par rapport à la quantité d'eau liée qui y est contenue, pour apporter l'humidité à ladite composition de façon à provoquer son autocoulabilité quand on applique ladite composition à une surface d'un four et analogue, sur laquelle un nouveau doublage réfractaire est à déposer ou on doit réparer un doublage réfractaire existant endommagé, ledit four étant maintenu à une température élevée suffisante pour provoquer l'activation thermique de ladite composition réfractaire, ce qui permet la libération et la liquéfaction de ladite eau chimiquement liée depuis ledit matériau hydraté, de telle sorte que ladite composition devient autocoulable et peut s'écouler à partir d'un endroit sur ladite surface auquel on l'a déposée initialement jusqu'à un autre endroit proche sur ladite surface où elle recouvre complètement ladite surface d'un nouveau doublage réfractaire, ou remplit les défauts et effectue la réparation d'un doublage réfractaire existant, ladite composition contenant de 0,1 à 10 % en poids de la composition de carbonate de calcium ; et de 0,1 à 5 % en poids de la composition d'un composé choisi dans le groupe constitué d'un verre au phosphate, non traité et traité avec un composé choisi dans le groupe constitué de l'acide phosphorique et d'un agent hydrophobe.

2. Composition selon la revendication 1, dans laquelle on choisit l'agrégat réfractaire dans le groupe constitué de la magnésie, la dolomite, l'olivine, la dolomite revêtue de carbonate de calcium et leurs mélanges.

3. Composition selon la revendication 1 ou 2, dans laquelle l'agrégat réfractaire est le complément de la composition totale pour donner 100 %.

4. Composition selon l'une quelconque des revendications précédentes, dans laquelle on choisit le matériau hydraté dans le groupe constitué des métasilicates et sulfates de métaux alcalins hydratés et des métasilicates et sulfates de métaux alcalino-terreux hydratés.

5. Composition selon la revendication 4, dans laquelle on choisit le matériau hydraté dans le groupe constitué du métasilicate de sodium pentahydraté, du métasilicate de sodium nonahydraté, du sulfate de magnésium heptahydraté et de leurs mélanges.

6. Composition selon l'une quelconque des revendications précédentes, dans laquelle l'eau de cristallisation associée au matériau hydraté représente 7 à 35 % en poids de la composition totale.

7. Composition selon l'une quelconque des revendications précédentes, dans laquelle chaque mole de matériau hydraté contient au moins 20 % en poids d'eau de cristallisation.

8. Composition selon la revendication 2, dans laquelle la dolomite revêtue de carbonate de calcium a un revêtement d'une épaisseur de 0,4 à 1,0 µm de carbonate de calcium sur la dolomite.

9. Composition selon la revendication 4, dans laquelle le métal alcalin est le sodium et le métal alcalino-terreux est le magnésium.

10. Composition selon la revendication 4, dans laquelle le matériau hydraté est un hydrate de métasilicate de sodium.

11. Composition selon la revendication 7, dans laquelle chaque mole de matériau hydraté comprend 5 à 9 mol d'eau de cristallisation associée.

12. Procédé permettant l'application à sec d'un nouveau revêtement d'un doublage réfractaire ou la réparation d'un doublage réfractaire existant sur les surfaces intérieures d'un four et analogues, à haute température, qui comprend :
la mise en place dans ledit four à proximité de la surface intérieure à recouvrir ou à réparer, une quantité suffisante pour effectuer ledit revêtement ou la réparation, d'une composition réfractaire sèche activée thermiquement selon l'une quelconque des revendications 1 à 11;
la température dans le four étant maintenue ou portée à un niveau suffisant pour provoquer l'activation thermique de ladite composition réfractaire, ce qui provoque la libération et la liquéfaction de ladite eau chimiquement liée à partir dudit matériau hydraté, de sorte que ladite composition devient autocoulable et s'écoule d'un endroit de ladite surface sur laquelle on l'a déposée initialement, pour recouvrir complètement ladite surface d'un nouveau doublage réfractaire, ou remplir des défauts et effectuer la réparation d'un doublage réfractaire existant ; et
le maintien d'une température suffisamment élevée dans ledit four pour évaporer l'eau liquide de ladite composition, ce qui provoque le séchage de ladite composition réfractaire et sa prise sur place en donnant un doublage réfractaire nouvellement appliqué ou réparé.

13. Procédé selon la revendication 12 dans lequel la température dans le four est d'au moins 500°C.

14. Procédé d'installation et de réparation du doublage réfractaire d'un four et analogue qui comprend:
le dépôt dans ledit four à proximité de la surface à recouvrir ou à réparer d'une quantité d'une composition réfractaire sèche thermiquement activée composée d'un agrégat réfractaire contenant MgO ou un équivalent de MgO et d'un matériau hydraté contenant de l'eau chimiquement liée sous forme cristalline, ledit matériau hydraté étant présent en quantité suffisante, en ce qui concerne la quantité d'eau liée contenue dans ce matériau pour apporter l'humidité à ladite composition, de sorte qu'à une température suffisamment élevée pour provoquer la libération et la liquéfaction de ladite eau liée, température à laquelle ledit four est porté ou maintenu, l'eau se mélange à la composition pour la rendre autocoulable ;
l'inclinaison dudit four pour diriger l'écoulement de la composition réfractaire à l'endroit de la surface à recouvrir ou à réparer ; et
la prise et le séchage de la composition réfractaire.

15. Procédé selon la revendication 14 dans lequel la composition réfractaire sèche thermiquement activée est déposée dans le four par l'un des procédés choisis dans le groupe constitué de pelleter en place, mettre en place par une grue, mettre en place avec un chariot à fourche et racler en place avec une machine.

16. Procédé selon la revendication 14 ou la revendication 15 dans lequel on maintient le four à une température d'au moins 500°C.
